(19) Europäisches Patentamt
European Patent Office
Office européen des brevets

(11) Veröffentlichungsnummer : **0 379 932 B1**

(12) **EUROPÄISCHE PATENTSCHRIFT**

(45) Veröffentlichungstag der Patentschrift :
**07.04.93 Patentblatt 93/14**

(51) Int. Cl.$^5$ : **C09J 133/02,** C09J 171/00, C09J 7/02

(21) Anmeldenummer : **90100805.2**

(22) Anmeldetag : **16.01.90**

(54) **Wasserlösliche Haftklebemassen und ihre Verwendung zur Herstellung von dauertemperaturbeständigen, auf feuchten Substraten haftenden Spleissbändern.**

(30) Priorität : **21.01.89 DE 3901690**

(43) Veröffentlichungstag der Anmeldung :
**01.08.90 Patentblatt 90/31**

(45) Bekanntmachung des Hinweises auf die Patenterteilung :
**07.04.93 Patentblatt 93/14**

(84) Benannte Vertragsstaaten :
**AT BE CH DE DK ES FR GB GR IT LI LU NL SE**

(56) Entgegenhaltungen :
**EP-A- 0 081 846**
**EP-A- 0 344 589**

(73) Patentinhaber : **Lohmann GmbH & Co. KG**
**Irlicher Strasse 55**
**W-5450 Neuwied 12 (DE)**

(72) Erfinder : **Czech, Zbigniew, Dipl.-Chem. Dr.**
**Rostocker Strasse 10**
**W-5400 Koblenz 1 (DE)**
Erfinder : **Wehmann, Jörg**
**Wehrhölzchenstrasse 1**
**W-5455 Hardert (DE)**

(74) Vertreter : **Flaccus, Rolf-Dieter, Dr.**
**Patentanwalt Sperlingsweg 32**
**W-5047 Wesseling (DE)**

EP 0 379 932 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wasserlösliche Haftklebemassen, die nach der Beschichtung und Trocknen als selbstklebende Filme außer einer exzellenten thermischen Dauerresistenz eine hohe Haftung zum Papier und anderen feuchten Substraten aufweisen und ihre Verwendung zur Herstellung von dauertemperaturbeständigen auf feuchten Substraten haftenden Spleißbändern.

Die bekannten wasserlöslichen Haftklebemassen werden auch unter anderem zur Herstellung von wasserdispergierbaren Spleißbändern verwendet werden und sind anhand folgender Patentschriften beschrieben:

| | |
|---|---|
| US-A 2,838,421 | Mischung aus Polyacrylsäure und Polyethylenglykol oder Polypropylenglykol, |
| US-A 3,321,451 | Copolymer auf Basis von Acrylsäureestern und aminogruppenhaltigen Methacrylaten, |
| DE-C 21 42 770 | Mischung aus Acrylsäureestercopolymerisaten, ethoxyliertem Polyvinylalkohol, Polyvinylmethylether und Polyvinylpyrrolidon |
| DE-C 22 36 575 | Polyvinylether-Dispersionen, |
| US-A 3,865,770 | Acrylsäure/Acrylsäureester-Copolymere neutralisiert mit Alkanolaminen unter Zusatz von weichmachenden Polyoxyethylenverbindungen |
| DE-C 23 11 746 | Vinylmethylether/Maleinsäure-Copolymerisate abgemischt mit einem Alkylphenoxypolyglykolether und nicht umgesetzten Alkylphenoxyglykolethern als Weichmacher, |
| DE-C 29 04 233 und EP-B 0 058 382 | Acrylsäureester/Acrylsäure-Copolymerisate neutralisiert mit tertiären ethoxylierten N-Alkylalkandiaminen und Alkalien |
| EP-B 0 081 846 | Acrylsäure/gegebenfalls Acrylsäureester/Acrylamid-Copolymerisate abgemischt mit mehrwertigen klebrigmachen den Alkoholen und Alkalien, |
| US-A 4,413,080 | carboxylgruppenhaltige Copolymerisate auf Isooctylacrylat/Butylacrylat-Basis abgemischt mit wasserlöslichen Polyoxyethylenderivaten und Tallharztackifiern, |
| US-A 4,442,258 | Alkoxyalkylacrylat/N-Alkylaminoacrylat-Copolymere abgemischt mit wasserlöslichen Polyethern- oder Polyalkohol-Derivaten, |
| EP-B 0 141 504 | carboxylgruppenhaltige Copolymerisate auf Isooctylacrylat/Butylacrylat-Basis abgemischt mit Phosphorosäureestern und OH-funktionellen ethoxylierten Weichmachern, |
| EP-B 0 147 067 | wasserlösliche Haftklebemassen auf Basis von 2-Ethylhexylacrylat, Methacrylsäure und hydroxylgruppenhaltigen (Meth)acrylaten, |
| US-A 4,518,745 | wasserlösliche Haftklebemassen aufgebaut aus Vinylphosphonsäure, Acryl-oder Methacrylamid, Vinylsulphonsäure und Vinylphosphonsäureestern, |
| DE-C 34 23 446 | wasserlösliche Terpolymere auf Basis von N-Vinyllactam, N-Vinylsäureamiden, Acrylsäure(salzen) und Alkylvinylethern, |
| DE-A 38 25 527 | wasserlösliche Haftklebemassen auf β-Acryloyloxypropionsäure-Basis. |

Die bisher eingesetzten wasserlöslichen Haftklebemassen weisen verschiedene Nachteile auf, die ihre kommerzielle Verwendung einschränken. Die Mängel dieser Produkte bestehen darin, daß die bekannten wasserlöslichen Haftklebemassen nicht auf Dauer hochtemperaturbeständig sind und ihre Wasserlöslichkeit nach einer thermischen Belastung drastisch abnimmt. Derartige Haftklebemassen haften auch nicht ausreichend auf feuchtem Papier und anderen feuchten Substraten. Dies trifft auch für die Produkte aus EP-B 0 081 846 zu, die als nächstliegender Stand der Technik betrachtet werden müssen.

Aufgabe der Erfindung ist es deshalb, eine wasserlösliche Haftklebemasse zu synthetisieren, die die oben erwähnten Mängel nicht mehr aufweist und die insbesondere neben einer ausgezeichneten Dauerhitzebeständigkeit gleichzeitig eine gute Haftung zu feuchten Materialien und eine ausreichende Wasserlöslichkeit aufweist.

Die Aufgabe wird erfindungsgemäß gelöst mittels wasserlöslicher Haftklebemassen, die aus Vinylcarbonsäure, Hydroxyl(meth)acrylat, N-substituiertem (Meth)acrylamid und Vinylcarbonsäuresalzen aufgebaut sind.

Gegenstand der Erfindung sind somit wasserlösliche Haftklebemassen, bestehend aus folgenden Komponenten:

a) 100 Gew.-Teilen wenigstens eines wasserlöslichen Copolymerisats aus
  55 bis 90 Gew.-% wenigstens einer Vinylcarbonsäure
  5 bis 35 Gew.-% wenigstens eines hydroxylgruppenhaltigen (Meth-)acrylats

1 bis 15 Gew.-% wenigstens eines N-substituierten (Meth-)acrylamidderivats und
0,05 bis 10 Gew.% wenigstens eines Vinylcarbonsäuresalzes

b) 50 bis 200 Gew.-Teilen wenigstens eines wasserlöslichen Weichmachers aus der Gruppe der Polyoxyalkylene mit einer Molekularmasse bis 1000 und

c) 0,1 bis 8 Gew.-Teilen eines Vernetzungsmittels.

Als Vinylcarbonsäuren für das wasserlösliche Copolymerisat a) werden bevorzugt (Meth-)acrylsäure, β-Acryloyloxypropionsäure, Vinylessigsäure, Fumarsäure, Crotonsäure, Aconitsäure oder Itaconsäure allein oder in Mischungen untereinander verwendet. Besonders bevorzugt sind (Meth-)acrylsäure und β-Acryloyloxypropionsäure.

Als hydroxylgruppenhaltige (Meth-)acrylate, d.h. Ester der (Meth-)acrylsäure werden die Hydroxyalkyl-(meth-)acrylate bevorzugt, insbesondere 2-Hydroxyethyl(meth-)acrylat, 2-Hydroxypropyl(meth)acrylat oder 4-Hydroxybutyl(meth)acrylat, die allein oder im Gemisch untereinander eingesetzt werden können.

Als N-substituierte (Meth-)acrylamidderivate kommen bevorzugt N-substituierte (Meth-)acrylamidderivate der allgemeinen Formel

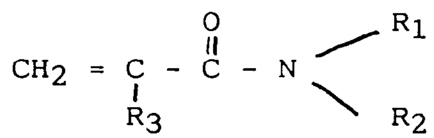

zum Einsatz,
in der $R_1$ und $R_2$ gleich oder verschieden sind und eine Alkyl-, bevorzugt mit 1 bis 8 Kohlenstoffatomen, Aryl-, bevorzugt Phenyl oder Naphthyl, Arylalkyl-, Alkylaryl-, Alkoxyalkyl-, Hydroxyalkyl-, Alkoxyaryl-, Carboxylalkyl-, Carboxylaryl-, Acetylalkyl- oder Acetylalkoxyalkylgruppe, wobei $R_1$ oder $R_2$ auch ein Wasserstoffatom, $R_3$ ein Wasserstoffatom oder eine Methylgruppe sein können.

Die Vinylcarbonsäuresalze, die zur Herstellung des wasserlöslichen Copolymerisats a) eingesetzt werden, sind bevorzugt Metall-, insbesondere Alkalimetallsalze und/oder Ammoniumsalze der vorstehend beschriebenen Vinylcarbonsäuren, wobei die Salze der (Meth-)acrylsäure und der β-Acryloyloxypropionsäure besonders bevorzugt sind. Als Metallsalze sind insbesondere die Lithium-, Natrium- und/oder Kaliumsalze zu nennen.

Als wasserlöslicher Weichmacher b) finden die Polyoxyalkylene mit einer Molekularmasse von kleiner als 1000 bevorzugt Verwendung, Beispiele hierfür sind Polypropylenglykol, Polyethylenglykol, Polyoxypropylen/Polyoxyethylen-Copolymer, Monoethylenglykoldimethylether oder Polyethylenglykoldimethylether.

Die vorstehenden Polyoxyalkylene können allein oder im Gemisch untereinander eingesetzt werden.

Das Vernetzungsmittel c) besteht vorteilhaft entweder aus wenigstens einem Metallchelat, einem Metallsäureester einem Epoxid, eine Aziridin, eine Triazin oder einem Melaminformaldehydharz.
Besonders bevorzugt sind als Vernetzer die Metallchelate, insbesondere die der Übergangsmetalle wie Titanum und Zirkonium, z.B. mit Acetylaceton.

Die erfindungsgemäße wasserlösliche Haftklebemasse wird nach einer bevorzugten Herstellungsweise durch radikalische Polymerisation der zur Herstellung des Copolymerisats a) benötigten Komponenten in einem organischen Lösemittel vorgenommen, wobei anschließend an die Polymerisation die wasserlöslichen Weichmacher und Vernetzungsmittel zugesetzt werden. Als organische Lösemittel sind Aceton, Benzin mit Siedegrenzen 60/95 oder 80/110, Toluol, Isopropylalkohol, Propylalkohol, Butylalkohol, Isobutylalkohol, Ethylacetat und/oder Gemische der vorstehenden Lösemittel geeignet.

Die so erhaltene Haftklebemasse wird dann auf eine Trägerfolie aufgetragen, bei Temperaturen von etwa 100°C getrocknet und kann dann durch Kaschieren auf eine entsprechende Unterlage zu einem Spleißband verarbeitet werden.

Gegenstand der Erfindung ist somit ferner auch die Verwendung der erfindungsgemäßen Haftklebemassen zur Herstellung von dauertemperaturbeständigen, auf feuchten Substraten haftenden Spleißbändern.

Die Erfindung wird nachstehend anhand der folgenden Beispiele erläutert:

Beispiel 1:

In einem 1l-Dreihalskolben, der mit Rührer, Rückflußkühler, Thermometer und Tropftrichter versehen war, werden 100 g Aceton und 100 g Butanol-1 vorgelegt und unter Rühren mittels eines elektrisch beheizten Ölbades zum Sieden gebracht. Zu diesem Lösemittelgemisch wurde ein Monomerengemisch aus 112 g Acrylsäure, 60 g 4-Hydroxybutylacrylat, 20 g N-Methylolacrylamid und 6 g eines 84 %igen wäßrigen Natriumacrylates innerhalb von 3 h zudosiert. Das zudosierte Monomerengemisch enthält 2,0 g AIBN. Nach einer Zeit von 4 h wird die Polymerisation beendet. Das fertige Polymerisat ($\eta$ = 12,5 Pas) wird mit Isopropylalkohol auf einen Feststoffgehalt von 40 Gew.-% verdünnt, mit 90 Gew.-% Polypropylenglykol 400 und 1,5 Gew.-% Zirconacetylacetonat (bezogen auf die gesamte Copolyacrylatmasse) abgemischt. Die so erhaltene Haftklebemasse wird auf eine siliconisierte Polyesterfolie aufgetragen, im Trockenkanal bei 115°C getrocknet und anschließend beidseitig durch das Kaschieren auf ein Teefilterpapier aufgebracht.

Beispiele 2 bis 18:

Nach der Vorschrift von Beispiel 1 wurden die in der Tabelle 1 zusammengefaßten Ausgangsmonomeren (Angaben in Gewichtsteilen) polymerisiert und danach mit wasserlöslichen Weichmachern und entsprechenden Vernetzungsmitteln abgemischt.

Tabelle 1

| Beispiel | Vinylcarbonsäure | | | Hydroxylgruppenhaltiges (Meth)acrylat | | | N-Substituiertes (Meth)acrylamid | | | Metallsalz der Vinylcarbonsäure | | | Wasserlöslicher Weichmacher | | | Vernetzer | | |
|---|---|---|---|---|---|---|---|---|---|---|---|---|---|---|---|---|---|---|
| | AS | APS | MAS | HEA | HBA | HPMA | NMA | MAGME | IBMA | NaA | NaAPS | KA | PPG 400 | PEGDM 500 | PG | ZrACA | BT | MFH |
| 2 | 70 | — | — | 10 | — | — | — | — | 12 | 3 | — | — | 100 | — | — | 1,5 | — | — |
| 3 | 70 | 10 | — | — | 10 | — | 8 | — | — | — | 2 | — | 90 | — | — | — | 0,8 | — |
| 4 | 65 | 5 | 5 | 10 | — | 5 | — | — | 6 | — | 4 | — | — | 100 | — | — | — | 5,0 |
| 5 | — | 80 | — | — | — | 10 | 5 | — | — | 5 | — | — | — | — | 75 | 0,9 | — | — |
| 6 | 75 | 6 | — | — | 5 | — | — | 4 | 6 | 3 | — | 1 | 160 | — | — | 4,5 | — | — |
| 7 | 40 | 40 | — | 5 | — | 5 | — | — | 7 | 3 | — | — | 120 | — | — | — | 1,2 | — |
| 8 | — | — | 80 | 15 | — | — | 4 | — | — | — | 1 | — | — | — | 150 | — | — | 7,0 |
| 9 | — | 60 | — | — | — | 20 | — | — | 12 | — | 8 | — | — | 120 | — | 3,0 | — | — |
| 10 | 75 | — | — | — | 5 | 10 | 1 | — | — | 9 | — | — | — | 140 | — | 3,5 | — | — |
| 11 | 60 | — | — | — | — | 25 | — | — | 10 | 3 | 2 | — | 85 | — | — | — | 0,7 | — |
| 12 | 70 | 10 | — | 10 | — | — | 8 | — | — | — | — | 2 | 150 | — | — | — | 1,8 | — |
| 13 | 60 | 18 | — | 5 | 5 | — | 2 | 5 | — | 5 | — | — | — | 110 | — | 2,5 | — | 3,5 |
| 14 | 70 | — | — | 5 | 10 | 9 | — | 3 | — | — | 2 | 1 | — | — | 95 | — | — | 2,5 |
| 15 | 55 | 25 | — | — | — | 10 | — | — | 6 | 4 | — | — | 140 | — | — | 4,0 | — | — |
| 16 | 40 | 20 | 15 | — | 5 | 8 | 4 | — | 4 | 2 | 2 | — | 130 | — | — | — | 1,8 | — |
| 17 | 80 | 10 | — | — | — | 5 | 4 | — | — | 1 | — | — | — | — | 160 | 5,0 | — | — |
| 18 | 65 | — | — | — | — | 25 | — | — | 7 | — | 3 | — | 110 | — | — | — | 1,5 | — |

Abkürzungsverzeichnis:

| | |
|---|---|
| AS | - Acrylsäure |
| APS | - β-Acryloyloxypropionsäure |
| MAS | - Methacrylsäure |
| HEA | - 2-Hydroxyethylacrylat |
| HBA | - 4-Hydroxybutylacrylat |
| HPMA | - 2-Hydroxypropylmethacrylat |
| NMA | - N-Methylolacrylamid |
| MAGME | - Methylacrylamidoglykolatmethylether |
| IBMA | - Isobutoxymethylacrylamid |
| NaA | - Natriumacrylat |
| NaAPS | - Natrium-β-Acryloyloxypropionat |
| KA | - Kaliumacrylat |
| PPG 400 | - Polypropylenglykol mit einer Molekularmasse von 400 |
| PEGDM 500 | - Polyethylenglykoldimethylether mit einer Molekularmasse von 500 |
| PG | - Polyglykol (Molekularmasse 600) |
| ZrACA | - Zirkonacetylacetonat |
| BT | - Butyltitanat |
| MFH | - Melaminformaldehydharz |

Die Prüfwerte der auf diesem Wege erhaltenen wasserlöslichen Spleißbänder wurden in der Tabelle 2 zusammengestellt.

Tabelle 2

| Beispiel | Klebkraft (Stahl) (nach AFERA 4015) [N] | | | | | Klebkraft (Papier) (nach AFERA 4001) [N] | Tack (Stahl) (nach AFERA 4015) [N] | Dynamische Scherfestigkeit (Siliconpapier) [N] | Wasserlöslichke | | |
|---|---|---|---|---|---|---|---|---|---|---|---|
| | 20 °C | 70 °C | 120 °C | 150 °C | 200 °C | 20 °C | 20 °C | 200 °C | pH=4 | pH=7 | pH=12 |
| 2 | 20,5 | 6,5 | 7,5AB | 7 AB | 4,5 AB | 11,5 | 3,5 | 30-40 | lösl. | lösl. | lösl. |
| 3 | 19 | 6 | 6,5AB | 5,5AB | 4 AB | 11 | 3 | 30-35 | " | " | " |
| 4 | 18 | 6 | 5,5AB | 4,5AB | 3,5 AB | 12 | 3,5 | 35-40 | " | " | " |
| 5 | 22 | 9 | 6 AB | 4,5AB | 3 AB | 11,5 | 4 | 20-30 | " | " | " |
| 6 | 21 | 11 | 9 AB | 5 AB | 4 AB | 13,5 | 3,5 | 30-40 | " | " | " |
| 7 | 20 | 8,5 | 6,5AB | 6 AB | 3,5 AB | 13 | 4 | 35-45 | " | " | " |
| 8 | 14 | 5 | 3,5AB | 3 AB | 2,5 AB | 10 | 2,5 | 18-28 | " | " | " |
| 9 | 23 | 12 | 5,5AB | 3,5AB | 3 AB | 15 | 4,5 | 25-35 | " | " | " |
| 10 | 22 | 13 | 9,5AB | 6 AB | 4 AB | 16 | 5,5 | 40-60 | " | " | " |
| 11 | 19 | 12 | 10 AB | 6 AB | 3,5 AB | 13 | 3,5 | 55-70 | " | " | " |
| 12 | 24 | 11 | 8 AB | 7 AB | 4,5 AB | 18,5 | 4,5 | 50-70 | " | " | " |
| 13 | 20 | 10 | 7,5AB | 6,5AB | 2,5 AB | 17 | 3,5 | 40-65 | " | " | " |
| 14 | 18,5 | 9,5 | 6,5AB | 5 AB | 3 AB | 14,5 | 3 | 25-40 | " | " | " |
| 15 | 19 | 10,5 | 8,5AB | 4,5AB | 2,5 AB | 18,5 | 4 | 40-55 | " | " | " |
| 16 | 16,5 | 10 | 8 AB | 6,5AB | 3 AB | 13,5 | 3,5 | 25-35 | " | " | " |
| 17 | 26,5 | 13,5 | 10 AB | 8,5AB | 5,5 AB | 20,5 | 4,5 | 60-82 | " | " | " |
| 18 | 20,5 | 12 | 10 AB | 8 AB | 6 AB | 14,5 | 3,5 | 35-50 | " | " | " |

AB = Adhäsionsbruch

Vergleichsbeispiel (gemäß EP 0 081 846)

Es wurde eine Haftklebemasse aus 95 Gewichtsteilen Acrylsäure und 5 Gewichtsteilen Acrylamid hergestellt. Als Lösemittel diente ein Gemisch aus Wasser und Aceton (Verhältnis 2:1), als Radikalbildner 0,6 Gewichtsteile Benzoylperoxid. Die Reaktionstemperatur betrug 74°C, der Feststoffgehalt 1 5 Gew.-%. Nach einer 6-stündigen Reaktion wurde das Polymerisat mit 1,7 Gewichtsteilen NaOH und 200 Gewichtsteilen Polyethylenglykolmonoethylether (M=270) bezogen auf 100 Gewichtsteile des Polymers abgemischt, auf eine siliconisierte Polyesterfolie aufgetragen, im Trockenkanal bei 115°C getrocknet und beidseitig durch das Kaschieren auf ein Teefilterpapier aufgebracht.

Tabelle 3 zeigt den Vergleich eines Spleißbands hergestellt gemäß Beispiel 1 der Erfindung (Spleißband 1) mit einem im Handel befindlichen Spleißband (Spleißband 2) und dem nach Vergleichsbeispiel gemäß EP 0 081 846 hergestellten Spleißband (Spleißband 3).

Tabelle 3:

Vergleichende Prüfung wasserlöslicher Spleißbänder

| Eigenschaften | Spleißband 1 (hergestellt nach Bspl. 1 | Spleißband 2 | Spleißband 3 (gemäß EP 0 081 846) |
|---|---|---|---|
| Klebkraft (Stahl) [N] | | | |
| 20 °C | 18,5 | 13 | 13 |
| 70 °C | 6,5 | Träger teilt sich | Träger teilt sich |
| Tack (Stahl) [N] | 6,5 | 2 | 4 |
| Dynamische Scherfestigkeit [N], 150 °C | 50 - 72 AB | 50 - 76 TR | 16 - 18 KB |
| Wasserlöslichkeit | | | |
| pH 12 | löslich | löslich | löslich |
| pH 7 | " | " | " |
| pH 4 | " | " | " |

AB - Adhäsionsbruch

KB - Kohäsionsbruch

TR - Trägerriß

Ergebnis:

Alle geprüften Spleißbänder zeigen ausgezeichnete Wasserlöslichkeit bei verschiedenen pH-Werten. Das nach Beispiel 1 hergestellte Spleißband 1 ist hinsichtlich Klebkraft und Tack den zum Vergleich getesteten Spleißbändern 2 und 3 überlegen.

Dynamische Scherfestigkeit

Gemessen auf Siliconrohpapier bei 150°C und 200°C nach Anwalzen mit 50 N (Verklebungsfläche 400 mm²).

Wasserlöslichkeit

1250 $mm^2$ Spleißband wird in einem Aufschlaggerät bei 3000 U/min 15 Minuten in 150 ml Wasser bei 20°C gerührt und die Auflösung des Klebebandes optisch beurteilt.

## Patentansprüche

1. Wasserlösliche Haftklebemasse, bestehend aus
   a) 100 Gew.-Teilen wenigstens eines wasserlöslichen Copolymerisats aus
   55 bis 90 Gew.-% wenigstens einer Vinylcarbonsäure,
   5 bis 35 Gew.-% wenigstens eines hydroxylgruppenhaltigen (Meth-)acrylats,
   1 bis 15 Gew.-% wenigstens eines N-substituierten (Meth-)acrylamidderivats und
   0,05 bis 10 Gew.% wenigstens eines Vinylcarbonsäuresalzes,
   b) 50 bis 200 Gew.-Teilen wenigstens eines wasserlöslichen Weichmachers aus der Gruppe der Polyoxyalkylene mit einer Molekularmasse bis 1000 und
   c) 0,1 bis 8 Gew.-Teilen eines Vernetzungsmittels.

2. Wasserlösliche Haftklebemasse nach Anspruch 1, dadurch gekennzeichnet, daß die Vinylcarbonsäure des Copolymerisats a) aus der aus (Meth-)acrylsäure, β-Acryloyloxypropionsäure, Vinylessigsäure, Fumarsäure, Crotonsäure, Aconitsäure oder Itaconsäure oder Gemischen dieser Säuren bestehenden Gruppe ausgewählt ist.

3. Wasserlösliche Haftklebemassen nach Anspruch 1, dadurch gekennzeichnet, daß das hydroxylgruppenhaltige (Meth-)acrylat des Copolymerisats a) ein Hydroxyalkyl(meth-)acrylat, insbesondere ein 2-Hydroxyethyl(meth-)acrylat, 2-Hydroxypropyl(meth-)acrylat und/oder 4-Hydroxybutyl(meth-)acrylat ist.

4. Wasserlösliche Haftklebemasse nach Anspruch 1, dadurch gekennzeichnet, daß das N-substituierte Acrylamidderivat des Copolymerisats a) ein N-substituiertes (Meth-)acrylamidderivat der allgemeinen Formel

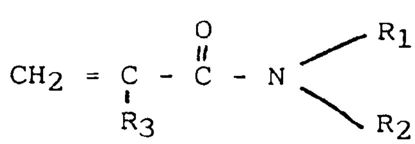

ist,
in der $R_1$ und $R_2$ gleich oder verschieden sind und eine Alkyl-, Aryl-, Arylalkyl-, Alkylaryl-, Alkoxyalkyl-, Alkoxyaryl-, Carboxylalkyl-, Carboxylaryl-, Acetylalkyl- oder Acetylalkoxyalkylgruppe, wobei $R_1$ und $R_2$ auch ein Wasserstoffatom, $R_3$ ein Wasserstoffatom oder eine Methylgruppe sein können.

5. Wasserlösliche Haftklebemasse nach Anspruch 1, dadurch gekennzeichnet, daß das Vinylcarbonsäuresalz des Copolymerisats a) ein Metall-, vorzugsweise ein Alkalisalz oder ein Ammoniumsalz ist.

6. Wasserlösliche Haftklebemassen nach Anspruch 1, dadurch gekennzeichnet, daß der wasserlösliche Weichmacher b) mit einer Molekularmasse unter 1000 ein Polypropylenglykol, Polyethylenglykol, Polyoxypropylen/Polyoxyethylen-Copolymer, Monoethylenglykoldimethylether und/oder Polyethylenglykoldimethylether oder ein Gemisch dieser Verbindungen ist.

7. Wasserlösliche Haftklebemasse nach Anspruch 1, dadurch gekennzeichnet, daß der Vernetzer ein Metallchelat, ein Metallsäureester, ein Epoxid, ein Azidrin, ein Triazin oder ein Melaminformaldehydharz ist.

8. Verfahren zur Herstellung der nach einem der Ansprüche 1 bis 7, dadurch gekennzeichnet, daß das Copolymerisat a) durch radikalische Polymerisation der Monomeren in einem organischen Lösemittel hergestellt wird, und nachfolgend die Komponenten b) und c) zugesetzt werden.

9. Verfahren nach Anspruch 8, dadurch gekennzeichnet, daß als organische Lösungsmittel Aceton, Benzin

mit Siedegrenzen 60/95 oder 80/110, Toluol, Isopropylalkohol, Propylalkohol, Butylalkohol, Isobutylalkohol, Ethylacetat oder Gemische dieser Lösungsmittel verwendet werden.

**10.** Verwendung der wasserlöslichen Haftklebemassen nach den Ansprüchen 1 bis 7 zur Herstellung von dauertemperaturbeständigen, auf feuchten Substraten haftenden Spleißbändern.

## Claims

**1.** A water-soluble, pressure-sensitive adhesive mass comprising

a) 100 parts by weight of at least one water-soluble copolymer of

| | |
|---|---|
| 55 to 90%-wt | of at least one vinylcarboxylic acid |
| 5 to 35%-wt | of at least one hydroxyl groups-containing (meth-)acrylate |
| 1 to 15%-wt | of at least one N-substituted (meth-)-acrylamide derivative and |
| 0.05 to 10%-wt | of at least one vinylcarboxylic acid salt, |

b) 50 to 200 parts by weight of at least one water-soluble softener of the polyoxyalkylene group having a molecular mass of up to 1000 and

c) 0.1 to 8 parts by weight of a cross-linking agent.

**2.** The water-soluble, pressure-sensitive adhesive mass according to claim 1, characterized in that the vinylcarboxylic acid of copolymer a) is selected from the group consisting of (meth-)acrylic acid, β-acryloyloxypropionic acid, vinylacetic acid, fumaric acid, crotonic acid, aconitic acid, or itaconic acid, or mixtures of these acids.

**3.** The water-soluble, pressure-sensitive adhesive mass according to claim 1, characterized in that the hydroxyl groups-containing (meth-)acrylate of copolymer a) is a hydroxyalkyl(meth-)acrylate, particularly a 2-hydroxyethyl(meth-)acrylate, 2-hydroxypropyl(meth-)acrylate and/or 4-hydroxybutyl(meth-)acrylate.

**4.** The water-soluble, pressure-sensitive adhesive mass according to claim 1, characterized in that the N-substituted acrylamide derivative of copolymer a) is an N-substituted (meth-)acrylamide derivative of the general formula

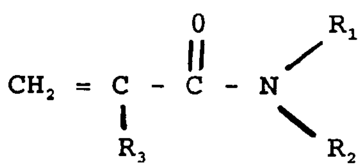

in which $R_1$ and $R_2$ are the same or different, and can represent an alkyl-, aryl-, arylalkyl-, alkylaryl-, alkoxyalkyl-, alkoxyaryl-, carboxylalkyl-, carboxylaryl-, acetylalkyl-, or an acetylalkoxyalkyl group, wherein $R_1$ and $R_2$ can also be a hydrogen atom, and $R_3$ a hydrogen atom or a methyl group.

**5.** The water-soluble, pressure-sensitive adhesive mass according to claim 1, characterized in that the vinylcarboxylic acid salt of copolymer a) is a metal salt, preferably an alkali salt or an ammonium salt.

**6.** The water-soluble, pressure-sensitive adhesive mass according to claim 1, characterized in that the water-soluble softener b) having a molecular mass below 1000 is a polypropylene glycol, polyethylene glycol, polyoxypropylene/polyoxyethylene copolymer, monoethylene glycol dimethylether and/or polyethylene glycol dimethylether or a mixture of these compounds.

**7.** The water-soluble, pressure-sensitive adhesive mass according to claim 1, characterized in that the cross-linking agent is a metal chelate, a metallic acid ester, an epoxide, an aziridine, a triazine or a melamine formaldehyde resin.

**8.** A process for the production of the pressure-sensitive adhesive mass according to any one of claims 1 to 7, characterized in that copolymer a) is produced by radical polymerisation of the monomers in an organic solvent, and that subsequently components b) and c) are added.

9. The process according to claim 8, characterized in that acetone, benzine having boiling limits of 60/95 or 80/110, toluene, isopropyl alcohol, propyl alcohol, butyl alcohol, isobutyl alcohol, ethylacetate, or mixtures of these solvents are used as organic solvents.

10. The use of the water-soluble, pressure-sensitive adhesive masses according to claims 1 to 7 for the production of splice tapes having continuous temperature-resistance and adherence to moist substrates.

## Revendications

1. Colle de contact soluble dans l'eau constituée de
   a) 100 parties en poids d'au moins un copolymère soluble dans l'eau formé de
      55 à 90% en poids d'au moins un acide vinylcarboxylique,
      5 à 35% en poids d'au moins un (méth)acrylate contenant des radicaux hydroxyle,
      1 à 15% en poids d'au moins un dérivé du (méth)acrylamide N-substitué et
      0,05 à 10% en poids d'au moins un sel d'acide vinylcarboxylique,
   b) 50 à 200 parties en poids d'au moins un plastifiant soluble dans l'eau, appartenant au groupe des polyoxyalkylènes qui possèdent une masse moléculaire allant jusqu'à 1.000 et
   c) 0,1 à 8 parties en poids d'un agent de réticulation.

2. Colle de contact soluble dans l'eau selon la revendication 1, caractérisée en ce que l'acide vinylcarboxylique du copolymère a) est choisi parmi l'acide (méth)acrylique, l'acide β-acryloyloxypropionique, l'acide vinylacétique, l'acide fumarique, l'acide crotonique, l'acide aconitique ou l'acide itaconique, ou les mélanges de ces acides.

3. Colle de contact soluble dans l'eau selon la revendication 1, caractérisée en ce que le (méth)acrylate contenant des radicaux hydroxyle du copolymère (a) est un (méth)acrylate d'hydroxyalkyle, plus particulièrement le (méth)acrylate de 2-hydroxyéthyle, le (méth)-acrylate de 2-hydroxypropyle et/ou le (méth)acrylate de 4-hydroxybutyle.

4. Colle de contact soluble dans l'eau selon la revendication 1, caractérisée en ce que le dérivé d'acrylamide N-substitué du copolymère a) est un dérivé de (méth)acrylamide N-substitué de la formule générale

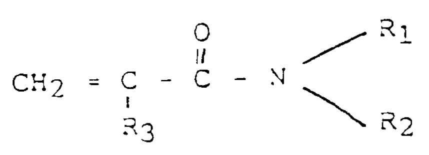

dans laquelle $R^1$ et $R^2$ sont identiques ou différents et représentent chacun un radical alkyle, comportant de préférence de 1 à 8 atomes de carbone, aryle, de préférence phényle ou naphtyle, arylalkyle, alkylaryle, alcoxyalkyle, hydroxyalkyle, alcoxyaryle, carboxyalkyle, carboxyaryle, acétylalkyle ou acétylalcoxyalkyle, où $R^1$ et $R^2$ peuvent aussi représenter chacun un atome d'hydrogène, $R^3$ représente un atome d'hydrogène ou le radical méthyle.

5. Colle de contact soluble dans l'eau selon la revendication 1, caractérisée en ce que le sel de l'acide vinylcarboxylique du copolymère a) est un sel de métal, de préférence un sel de métal alcalin, ou un sel d'ammonium.

6. Colle de contact soluble dans l'eau selon la revendication 1, caractérisée en ce que le plastifiant soluble dans l'eau b) d'une masse moléculaire inférieure à 1000 est un polypropylèneglycol, un polyéthylèneglycol, un copolymère de polyoxypropylène/polyoxyéthylène, l'éther diméthylique du monoéthylèneglycol et/ou l'éther diméthylique du polyéthylèneglycol, ou un mélange de ces composés.

7. Colle de contact soluble dans l'eau selon la revendication 1, caractérisée en ce que l'agent de réticulation est un chélate de métal, un ester d'acide à base de métal, un époxyde, une aziridine, une triazine ou une résine de mélamine-formaldéhyde.

**8.** Procédé de fabrication d'une colle de contact selon l'une quelconque des revendications 1 à 7, caractérisé en ce que l'on prépare le copolymère a) par polymérisation radicalaire des monomères dans un solvant organique et on ajoute ensuite les composants b) et c).

**9.** Procédé suivant la revendication 8, caractérisé en ce que, à titre de solvant organique, on utilise l'acétone, l'essence avec des plages d'ébullition 60/95 ou 80/110°C, le toluène, l'alcool isopropylique, l'alcool propylique, l'alcool butylique, l'alcool isobutylique, l'acétate d'éthyle, ou des mélanges de ces solvants.

**10.** Utilisation des colles de contact solubles dans l'eau selon l'une quelconque des revendications 1 à 7, en vue de la fabrication de bandes de raccordement ou d'épissure présentant une résistance ou stabilité de longue durée aux températures et adhérant aux supports humides.